# EUROPEAN PATENT SPECIFICATION

(11) **EP 4 497 883 B1**
(45) Date of publication and mention of the grant of the patent: **14.10.2026**
(21) Application number: 24190957.1
(22) Date of filing: 25.07.2024
(51) Int. Cl.: E03F 1/00

(54) **SUBTERRANEAN RAINWATER STORAGE DEVICE**
UNTERIRDISCHE REGENWASSERSPEICHERVORRICHTUNG
DISPOSITIF DE STOCKAGE D'EAU DE PLUIE SOUTERRAINE

(30) Priority: 25.07.2023 NL 2035466
(43) Date of publication of application: 29.01.2025
(73) Proprietor: Dyka B.V., 8331 LJ Steenwijk (NL)
(72) Inventor: Baijense, Leendert Adrianus, 8331 LJ Steenwijk (NL)
(74) Representative: Arnold & Siedsma

(56) References cited:
- EP-A1- 2 862 982
- EP-A2- 2 385 178
- WO-A1-2011/042415
- IT-A1- BO20 110 633

## Description

### Field of the Invention

The present invention relates to a rainwater crate for building a subterranean rainwater storage device. A rainwater storage device comprises an inner storage body that is built up with multiple rainwater crates. The inner storage body is enclosed by an outer layer to define a rainwater storage device volume.

### Background

Such subterranean rainwater storage device is known from European patent publication EP 4,159,944 A1 and installed for the storage and buffering of large amounts of rain water during rain fall that indirectly or directly drains into the rainwater storage device. The terrain above the rainwater storage device can be implemented as any infrastructure or urban area, such as a park, a sport area or a road.

A known inner storage body comprises multiple plastic rainwater crates that are stacked onto each other. The rainwater crates are relatively voluminous and lightweight, and are therefore preferably supplied in packs wherein the rainwater crates are at least partially inserted into each other or nested to save transport space. In the design of the known rainwater crates a compromise was found between the total weight and the outer dimensions both in use and during transport.

WO2011/042415A1 describes a drainage body which has two substantially identically formed surface-area units, namely a base unit and a substantially identically formed cover unit, which can be connected to one another in an installed state via spacer elements.

A disadvantage of the many known rainwater crates is that, after installation, inspection of the inner storage body is difficult.

IT BO20110633A1 describes an infiltration block for (rainwater) water, and a modular infiltration system for the disposal of rainwater comprising a plurality of said blocks.

### Object of the Invention

Aspects of the present disclosure aim to solve at least one of the above-mentioned problems and/or disadvantages and to provide at least one or more of the advantages described below. It may be an object of the present invention to provide a rainwater storage device having rainwater crates that can be inspected by inspection robots while taking the need for carrying vertical loads and stacking into account. Furthermore, it may be an object of the present invention to provide rainwater crates suitable for building a rainwater storage device, which are easy to handle, easy to connect and allow nesting of crates for transport.

This object and other objects which will become apparent from the following description are achieved at least in part by a rainwater crate, a method for stacking a rainwater crate, a set of rainwater crates, a subterranean rainwater storage device, a method for building a set and a method for building a subterranean rainwater storage device according to the independent claims. Embodiments are defined by the dependent claims.

### Summary of the Invention

In a first aspect, which can occur in combination with the other aspects and embodiments of the invention which are described herein, the present invention relates to a first rainwater crate that is configured for cooperation with an identical second rainwater crate for building a subterranean rainwater storage device. The first rainwater crate comprises a base wall having a first base wall section, a second base wall section and a third base wall section that are consecutive to each other in a first direction of the base wall, i.e. the wall sections are positioned next to each other without any gaps or interruptions between them. Furthermore, a plurality of supports project in the same direction from the base wall, preferably perpendicular to the base wall. Each of the first and second base wall sections is adjacent to the third base wall section and comprises one or more of the supports.

The supports in the first base wall section have a first distribution over the first base wall section and the supports in the second base wall section have a second distribution over the second base wall section, wherein each of the first and second distribution comprises: a first set of supports comprising at least one support having a distal end provided with a male connector, and a second set of supports comprising at least one support having a distal end provided with a female connector. The distal end of the first set of supports may be provided with a mixed male/female connector in a predetermined pattern and the distal end of the second set of supports may be provided with a mixed female/male connector in a mirrored pattern. Preferably, the distal end of the first set of supports is provided with a single male connector.

The distribution of supports with a male connector exhibit reflective symmetry with a distribution of supports with a female connector with respect to a notional (symmetry) plane that extends perpendicular to the first direction and through the center of the base wall. Said distribution of supports with a female connector may be a subset of the second set of supports, i.e. not all supports with a female connector require a corresponding male connector in the distributions. In other words, each of the supports with a male connector in a respective distribution of the first and second distribution has a corresponding support with a female connector in the other distribution of the first and second distribution. Hence, two identical rainwater crates (one of them in inverted position) may be stacked, by coupling the male and female connectors to each other, to form the rainwater storage device.

Each of the first and second distribution further comprises a third set of supports in between the first and second sets consisting of one or more supports having a distal end without a connector. Advantageously, the presence of the third set of supports provides further support which allows the rainwater crate to carry higher vertical loads while due to the lack of male connectors the stackability is not influenced.

According to an embodiment, the present invention relates to the first rainwater crate as described above, wherein the distribution of supports with a male connector exhibit 180° rotational symmetry with respect to a notional rotational axis that extends perpendicular to and through the center of the base wall. Preferably the first and second distribution exhibit 180° rotational symmetry with respect to a notional rotational axis that extends perpendicular to and through the center of the base wall. Advantageously, the stacking of identical rainwater crates is allowed in two orientations that are 180° apart and being prevented in the intermediate orientations. As such, the notional planes that extend perpendicular to the respective third base wall section are aligned when stacked. Allowing for the creation of an inspection passage between the third base wall section of the stacked rainwater crates.

For example, the first and second distribution may only comprise supports with a male connector in corners of the rainwater crate. Then, the first and second distribution alternatively comprises supports with a male connector and supports with a female connector in the corners of the rainwater crate. The remainder of the supports may have no connector or female connector.

In an embodiment, the present invention relates to the first rainwater crate as described above, wherein the third base wall section is free of supports such that free space is provided between the supports of the first base wall section and the supports of the second base wall section. Therefore, the maximal height of the third base wall section may be at most 5 times the average base wall section or the maximal height of the third base wall section may be less than half, one third, one fifth or one tenth of the average height of a support. Preferable the maximal height of the third base wall is in range of approximately 5-50 mm, preferably 20-40 mm, and more preferably around 30 mm.

In an embodiment, the present invention relates to the first rainwater crate as described above, wherein the at least one support having a distal end comprising a male connector in the first set of supports are supports having a single connector which is male and wherein the at least one support having a distal end comprising a female connector in the second set of supports are supports having a single connector which is female.

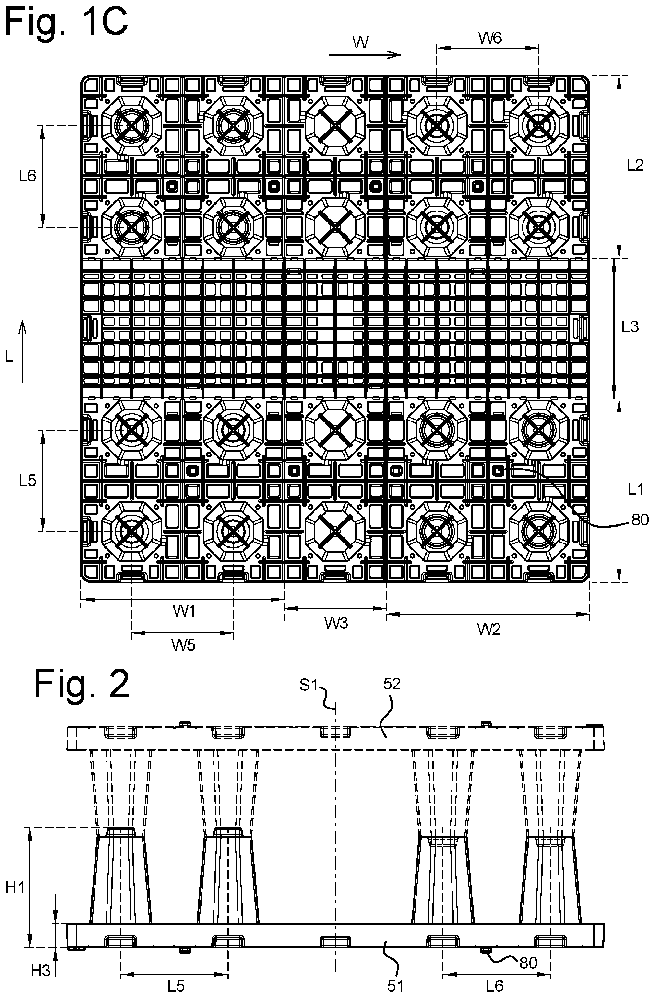

In an embodiment, the present invention relates to the first rainwater crate as described above, wherein the base wall has a square circumference and wherein the first base wall section, a second base wall section and a third base wall section each have a rectangular circumference. The first base wall section, a second base wall section and a third base wall section each having lengths L1, L2 and L3 respectively and in the first direction of the base wall widths W1, W2 and W3 respectively. Preferably the lengths of the base wall sections L1, L2 and L3 are equal, as shown in Figure 1C.

In an embodiment, the present invention relates to the first rainwater crate as described above, wherein the supports are hollow and have an entrance opening at the proximal end of the supports with the base wall. In a further embodiment, the present invention relates to the first rainwater crate as described above, wherein the first rainwater crate is configured to have in cooperation with the second rainwater crate a transport position and an installation position, wherein in the transport position the first rainwater crate is positioned straight above the second rainwater crate while the supports are nested into each other via the entrance openings, and wherein in the installation position the first rainwater crate is unnested from the second rainwater crate and rotated 180° over a notional first axis that lies in the plane of the base wall and extends through the center of the base wall in the first direction of the first rainwater crate.

In an embodiment, the present invention relates to the first rainwater crate as described above, wherein the first set consists of one or more supports having a distal end with a male connector and the second set consists of one or more supports having a distal end with a female connector.

In an embodiment, the present invention relates to the first rainwater crate as described above, wherein the supports are arranged in rows in the first direction of the base wall and/or in columns in a second direction of the base wall. In a further embodiment, the present invention relates to the first rainwater crate as described above, wherein an uneven number of supports are provided in each column.

In an embodiment, the present invention relates to the first rainwater crate as described above, wherein the number of supports in each of the first and second sets is at least twice the number of supports in the third set.

In an embodiment, the present invention relates to the first rainwater crate as described above, wherein the supports in the first base wall section and/or the supports in the second base wall section are equidistantly spaced. Equidistantly spaced refers to a distribution or arrangement where the intervals or distances between the adjacent supports points or objects are equal. Preferably, distribution in the first base wall section corresponds to the distribution in the second base wall section. Alternatively, any distribution or arrangement in which the distribution male supports in the first base wall section and the distribution female supports in the second base wall section, and vice versa, may be used.

In an embodiment, the present invention relates to the first rainwater crate as described above, wherein the sum of the width of the first and second base wall section is larger than the width of the third base wall section.

In an embodiment, the present invention relates to the first rainwater crate as described above, wherein the sum of the width of the first and third base wall section is less than the width of the second base wall section.

In an embodiment, the present invention relates to the first rainwater crate as described above, wherein the third base wall section is configured as a driving surface for robotic vehicles. For example, the third base wall section may be provided with a circular punch plate, a tread plate, or any other kind of traction grip plate adapted for use to be placed under a vehicle wheel to enable the wheel to obtain traction. Preferably, the traction grip plate is integrated in the third base wall section.

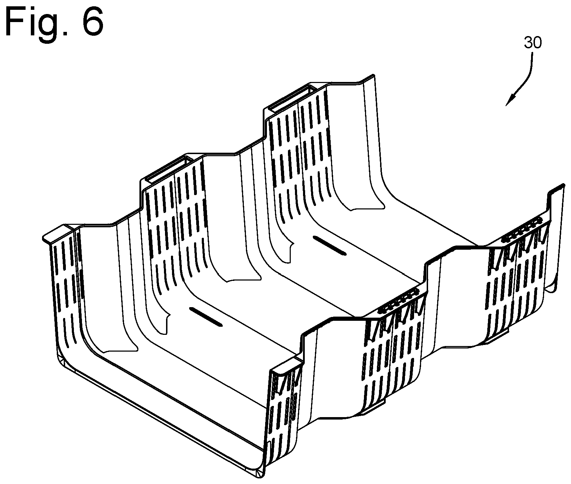

In an embodiment, the present invention relates to the first rainwater crate as described above, further comprising at least one sedimentation channel mounted in the third base wall section, wherein the at least one sedimentation channel extends in the second direction of the base wall, and wherein the at least one sedimentation channel has a closed floor. In a further embodiment, the sedimentation channel extends in the first direction of the base wall between a first and second sedimentation wall, wherein the distance between a first and second sedimentation wall in the first direction varies along the second direction. The sedimentation channel may have at least two relatively narrow sections alternating with at least two relatively wide sections over the width (in the second direction) of the base wall, wherein the length (in the first direction) of each narrow section is smaller than the length of the wide sections, preferably the sedimentation channel has at least three relatively narrow sections. For example, the narrow section may extend in the first direction from nearby a support of the first distribution to nearby a support of the second distribution, and the wide section may extend in the first direction from between two supports of the first distribution to between two supports of the second distribution. Preferably, the sedimentation channel has an outer shape and outer dimensions such that the sedimentation channel mates with the supports, as shown in Figure 6.

In an embodiment, the present invention relates to the first rainwater crate as described above, wherein the male connector is a plug and the female connector is a socket.

In an embodiment, the present invention relates to the first rainwater crate as described above, further comprising a plurality of coupling means located on at least one edge of the base wall suitable for coupling with a side wall having complementary coupling means.

In an embodiment, the present invention relates to the first rainwater crate as described above, wherein the supports comprise a circumferential wall, with preferably a constant wall height, that at the proximal side merges into the base wall. Advantageously, the supports possesses a greater level of resilience and durability compared to beveled alternatives.

In a second aspect, which can occur in combination with the other aspects and embodiments of the invention which are described herein, the present invention relates to a method for stacking a first rainwater crate in a second rainwater crate identical to the first rainwater crate, wherein the supports are hollow and have an entrance opening at the proximal end of the supports with the base wall, and wherein the supports in the second rainwater crate respectively enter the entrance opening of the supports in the first rainwater crate.In a third aspect, which can occur in combination with the other aspects and embodiments of the invention which are described herein, the present invention relates to a set comprising a first rainwater crate and a second rainwater crate according to the invention. In an embodiment thereof the distal ends of the supports in the first rainwater crate are respectively in contact with the distal ends of the supports in the second rainwater crate, and the third base wall sections of the first and second rainwater crates together form the opposite walls of a through channel, preferably an inspection channel and/or a sedimentation channel.

In a fourth aspect, which can occur in combination with the other aspects and embodiments of the invention which are described herein, the present invention relates to a subterranean rainwater storage device comprising an inner storage body, a plurality of coupling means and an outer layer around the inner storage body that together define a rainwater storage device volume, wherein the inner storage body comprises a plurality of sets according to the invention. The outer layer comprises at least one side wall connecting to the first and second rainwater crates in some of the sets, wherein the coupling means couple adjacent sets to each other.

In a fifth aspect, which can occur in combination with the other aspects and embodiments of the invention which are described herein, the present invention relates to a method for building a set according to the inventions, comprising: supplying a plurality of rainwater crates, preferably a plurality of stacked rainwater crates according to the invention, taking a first rainwater crate, preferably from the stack, rotating the first rainwater crate and placing the first rainwater crate on the second rainwater crate, such that the distal ends of the supports in the first rainwater crate are respectively in contact with the distal ends of the supports in the second rainwater crate.

In a sixth aspect, which can occur in combination with the other aspects and embodiments of the invention which are described herein, the present invention relates to a method for building an inversed set comprising a first rainwater crate and a second rainwater crate according to the invention. The method comprises supplying a plurality of rainwater crates, preferably a plurality of stacked rainwater crates according to the invention, taking a first rainwater crate, preferably from the stack, inverting the first rainwater crate and placing the second rainwater crate on the first rainwater crate, such that the base wall of the first rainwater crate is in contact with the base wall of the second rainwater crate and that the supports on the base walls are aligned.

In a seventh aspect, which can occur in combination with the other aspects and embodiments of the invention which are described herein, the present invention relates to a method for building a subterranean rainwater storage device according to the invention, comprising: supplying a plurality of rainwater crates, repeatedly taking a rainwater crate and placing a plurality of said rainwater crates in a row, repeatedly taking a rainwater crate and placing the same on a rainwater crate in the row such that the distal ends of the supports in the first rainwater crate are respectively in contact with the distal ends of the supports in the second rainwater crate. In an embodiment, the present invention relates to the method as described above, further comprising coupling the adjacent rainwater crates in the row to each other. In an embodiment, the present invention relates to the method as described above, further comprising mounting one or more side walls on the rainwater crates.

The various aspects and features described and shown in the specification can be applied, individually, wherever possible. These individual aspects, in particular the aspects and features described in the attached dependent claims, can be made subject of divisional patent applications.

### Brief description of Drawings

The invention will be explained in more detail below with reference to drawings in which illustrative embodiments thereof are shown. They are intended exclusively for illustrative purposes and not to restrict the inventive concept, which is defined by the appended claims.
Figure 1A shows in a first perspective view a rainwater crate according to an embodiment of the invention.
Figure 1B shows in a second perspective view the rainwater crate according to the embodiment shown in Figure 1A.
Figure 1C shows in a bottom view the rainwater crate according to the embodiment shown in Figure 1A.
Figure 2 shows in a side view a set of a first rainwater crate and a second rainwater crate according to an embodiment of the invention.
Figure 3A shows in a perspective view the set according Figure 2 in a first configuration according to the invention.
Figure 3B shows in a perspective view the set according Figure 2 in a second configuration according to the invention.
Figure 4 shows in a perspective view a subterranean rainwater storage device according to an embodiment of the invention.
Figure 5 shows a cutaway view of the subterranean rainwater storage device shown in Figure 4.
Figure 6 shows in a perspective view a sedimentation channel according to an embodiment of the invention.

### Detailed Description of Embodiments

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, back, front and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the disclosure may be implemented rather than as limiting the scope of the disclosure.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present disclosure, the only enumerated components of the device are A and B.

Different aspects of the present disclosure will be described more fully hereinafter with reference to the enclosed drawings. The embodiments disclosed herein can, however, be realized in many different forms and should not be construed as being limited to the aspects set forth herein.

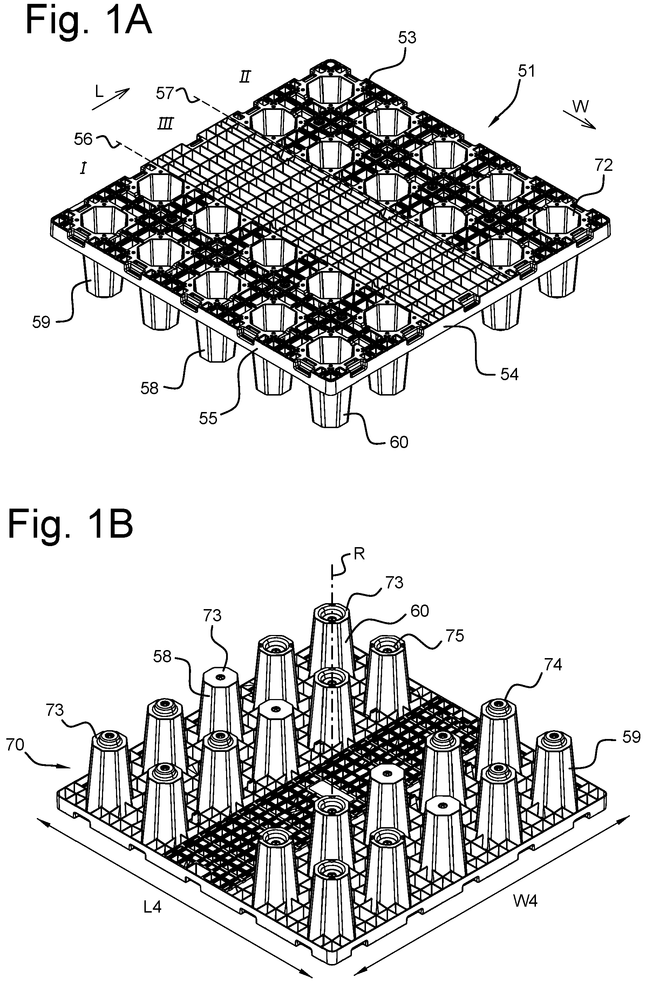

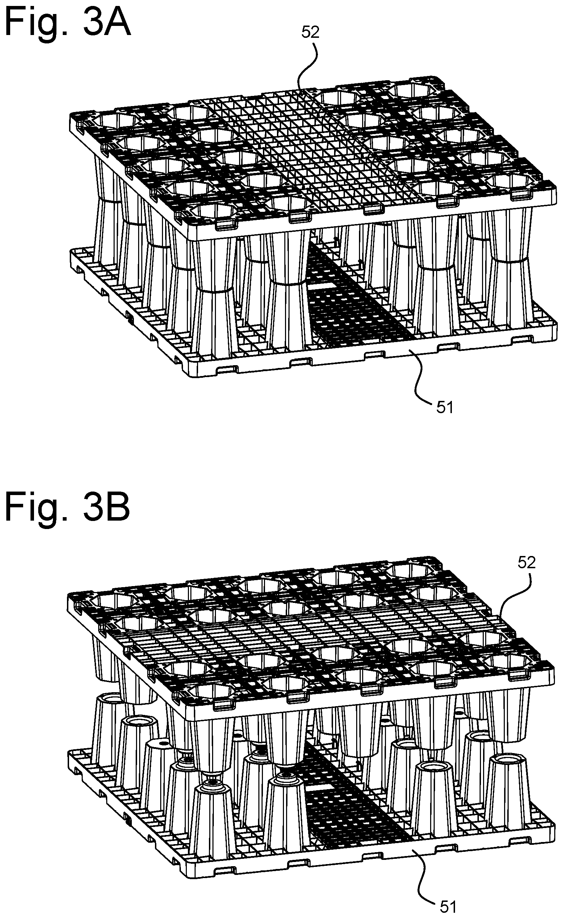

Figures 1A, 1B and 1C show a rainwater crate 51 configured for cooperation with an identical rainwater crate 52 for building a subterranean rainwater storage device (shown in Figures 2, 3A and 3B). The rainwater crate comprises a base wall 53 and a plurality of supports 58, 59, 60 projecting from the base wall.

The base wall 53 has a pair of parallel longitudinal edges 54 and a pair of parallel transverse edges 55 that extend orthogonal to each other to define a rectangular circumference of the rainwater crate 51, in this example a square circumference. The transverse edges 55 have a transverse width W4 in a width direction W and the longitudinal edges 54 have a longitudinal length L4 in a length direction L that is a number of times to the transverse width W4, in this example equal to the transverse width W4. The longitudinal length L4 is in the range of 0.4 - 1.2 meter, preferably approximately 0,8 meter. The base wall 53 has any configuration that allows the rainwater crate 51 to carry vertical loads, such as a solid unity or a water permeable grid or grating.

The supports 58, 59, 60 project parallel to each other and all in the same direction from the base wall 53, having their centre lines orthogonal to the base wall 53. Each support 58, 59, 60 comprises a circumferential wall 70 with a constant wall thickness that at the proximal side merges into the base wall 53 where it defines an entrance opening 72, and that tapers towards the distal end where it in this example merges into a bottom wall 73. The circumferential wall 70 has any configuration that allows the rainwater crate 51 to carry vertical loads, such as a solid unity or a water permeable grid or grating as schematically indicated for a small part thereof. The base wall 53 defines first support areas around the first entrance openings 72 that are adjacent to the first entrance openings 72.

The base wall 53 comprises a first base wall section I and a second base wall section II that are notionally divided by an intermediate third base wall section III halfway the longitudinal length L4 as indicated by broken lines 56, 57, giving the first base wall section I and the second base wall section II both an equal notional square circumference, as shown in Figure 1 C.

The supports are distributed over the first base wall section I in a first distribution and over the second base wall section II in a second distribution. The first distribution comprises a number of male supports 59, a number of female supports 60 and a number of neutral supports 58 therebetween. Each male support 59 is provided with a male connector 74 that projects from the bottom wall 73 and each female supports 60 is provided with a female connector 75 that is recessed from the bottom wall 73. The male connector has an outer shape and outer dimensions such that the male connector mates with and tightly fits inside the female connector 60. The bottom wall 73 of the neutral supports 58 are substantially flat.

The rainwater crate 51 is asymmetric with respect to a notional first plane S1 that extends through the middle and transverse to the base wall 53, as shown in Figure 2. The rainwater crate 51 is 180° rotational-symmetric with respect to a notional axis R that extends through the middle and transverse to the base wall 53, as shown in Figure 1B. The first base wall section I comprises two columns of hollow supports 58, 59, 60 having their centres at equal longitudinal intermediate distances L5 and equal transverse intermediate distances W5 from each other in a rectangular configuration. In this example the longitudinal intermediate distances L5 are equal to the transverse intermediate distances W5. The columns comprise two rows of male support and two rows of female supports that are divided by a row of neutral supports.

Similarly, the second base wall section II comprises ten hollow supports two columns of hollow supports 60 having their centres at equal longitudinal intermediate distances L6 and equal transverse intermediate distances W6 from each other in a rectangular configuration. In this example the longitudinal intermediate distances L6 are equal to the transverse intermediate distances W6. In this example the longitudinal intermediate distances L6 are equal to the longitudinal intermediate distances L5. The columns comprise two rows of male support and two rows of female supports that are divided by a row of neutral supports. Compared to the first base wall section I the order of supports are reversed. The third base wall section III is free of supports.

Figure 2 show a set of identical rainwater crates (one of them in inverted position) stacked by coupling the male and female connectors to each other. Another way of stacking a set of identical rainwater crates (not shown) is by inverting a first rainwater crate 51 and placing the second rainwater crate 52 on the first rainwater crate, such that the base wall of the first rainwater crate is in contact with the base wall of the second rainwater crate and that the supports on the base walls are aligned via protrusions 80. The base wall 53 has an average height H3 which increases to an average height H1 when a male support is provided on the base wall.

Figures 3A and 3B show the identical rainwater crates during installation. After inverting one of the identical rainwater crates, the rectangular circumferences of the rainwater crates may be aligned to define a cuboid space between the base walls. By rotating inverted rainwater crate with respect to the notional axis R, the supports may be aligned to allow stacking of the rainwater crates. In case of misalignment of the base wall sections, the male supports of both rainwater crates are aligned (as shown in Figure 3B). By rotating the rainwater crates relative to each other with respect to the notional axis R over 90°, the male supports of one rainwater crate are aligned with female supports of the other rainwater crate (as shown in Figure 3A).

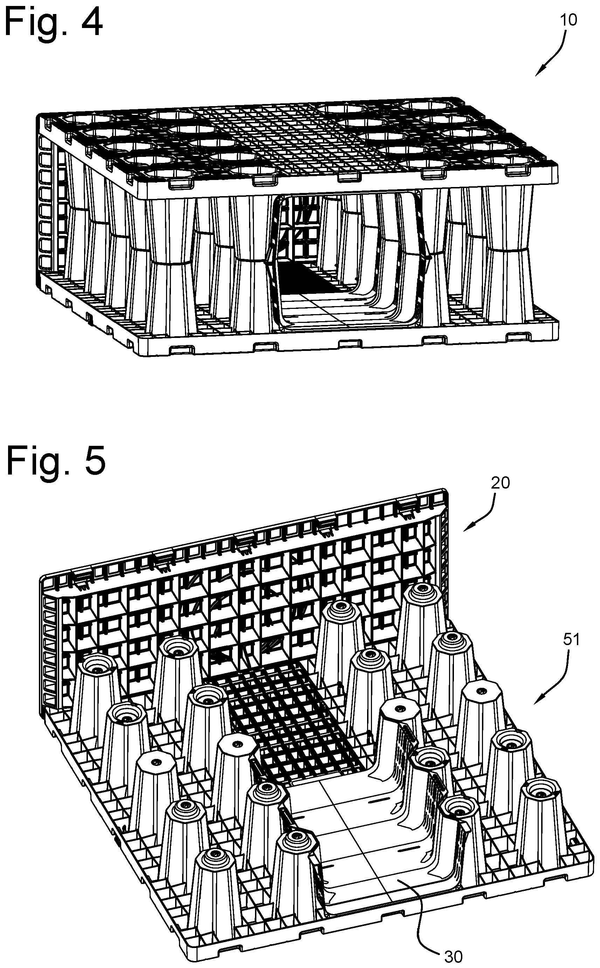

Figures 4, 5 and 6 show a subterranean rainwater storage device or parts thereof. When the rainwater storage device 10 is installed, a watertight sheet may be placed onto a flat bottom surface and subsequently a first rainwater crates 51 is laid down on its base wall 53. Optionally, multiple first rainwater crates 51 are laid down adjacent to each other and interlocked to form a matrix of rainwater crates. The rainwater crates 51, 52 may be supplied as the stacks (not shown) of nested rainwater crates 51, 52. The number of nested rainwater crates 51, 52 per stack then depends on the total weight that can be comfortably carried by one or two human installers, for example up to five stacked rainwater crates 51, 52.

Subsequently at least one sedimentation channel 30, as shown in Figure 6, is mounted in the third wall section III. The at least one sedimentation channel extends from the supports in the first wall section I to the supports in the first wall section II and a closed floor of the at least one sedimentation channel covers the third wall section III at partially. Each sedimentation channel 30, as shown in Figure 5, has an outer shape and outer dimensions such that the sedimentation channel mates with the supports. Because of the complementarity with the supports, the sedimentation channel will have alternative sections with a relatively wide opening and sections with a relatively narrow opening (between the supports) in the length direction L. The sedimentation will happen upon sudden enlarging of channel width due to the slowing down of waterflow. Preferably, the sedimentation channel has an open top and a closed floor.

Thereafter, a set of rainwater crates, as shown in Figure 3A, is formed by lifting and inverting a second rainwater crate 52, translating it to place it above the first rainwater crates 51 and rotating it to align the male supports of the first rainwater crates 51 with female supports of the second rainwater crate 52, and vice versa. In this manner the distal ends of the male supports 59 of the inverted rainwater crate 52 each and all stand on the distal ends of the female supports of the first rainwater crate 51, and the distal ends of the female supports 60 of the inverted rainwater crate 52 each and all stand on the distal ends of the male supports of the first rainwater crate 51.

The rainwater crate 51, the sedimentation channel 30, the side walls 20 and the clips 40 are made of a plastic, in particular a thermoplastic resin, such as polyethylene (PE), polypropylene (PP) or polyvinylchloride (PVC). The rainwater crate 51, the sedimentation channel 30, the side walls 20 and the clips 40 are for example made by means of injection moulding. The scope of the invention is limited only by the appended claims.

### List of reference signs

- 10.: Rainwater storage device
- 20.: Side wall
- 30.: Sedimentation channel
- 40.: Coupling clip

- 51.: First rainwater crate
- 52.: Second rainwater crate
- 53.: Base Wall
- 54.: Longitudinal edge
- 55.: Transverse edge
- 56.: Notional border between the first and third base wall section
- 57.: Notional border between the second and third base wall section
- 58.: Neutral supports
- 59.: Male supports
- 60.: Female supports

- 70.: Circumferential wall
- 72.: Entrance opening
- 73.: Bottom wall
- 74.: Male connector
- 75.: Female connector

- I.: First base wall section
- II.: Second base wall section
- III.: Third base wall section

- L.: Length direction
- L1.: Length of the first base wall section
- L2.: Length of the second base wall section
- L3.: Length of the third base wall section
- L4.: Length of the base wall
- L5.: Length between supports in the first base wall section
- L6.: Length between supports in the second base wall section

- W.: Width direction
- W1.: Width of the first base wall
- W2.: Width of the second base wall
- W3.: Width of the third base wall
- W4.: Width of the base wall
- W5.: Width between supports in the first base wall section
- W6.: Width between supports in the second base wall section

- H1.: Height of the base wall (including a male support) in the first base wall section
- H3.: Height of the base wall in the third base wall section

- S1: Notional Plane
- R: Rotation Axis

## Claims

1. A first rainwater crate (51) configured for cooperation with an identical second rainwater crate (52) for building a subterranean rainwater storage device (10), the first rainwater crate (51) comprising:
. a base wall (53) having a first base wall section (I) a second base wall section (II) and a third base wall section (III) that are consecutive to each other in a first direction of the base wall; and
.a plurality of supports projecting in a same direction from the base wall (53), preferably perpendicular to the base wall (53),
wherein each of the first and second base wall sections is adjacent to the third base wall section,
wherein each of the first and second base wall sections comprises one or more of the supports,
wherein the supports in the first base wall section have a first distribution over the first base wall section and the supports in the second base wall section have a second distribution over the second base wall section,
wherein each of the first and second distribution comprises:
. a first set of supports (59) comprising at least one support having a distal end provided with a male connector (74),
. a second set of supports (60) comprising at least one support having a distal end provided with a female connector (75),
and
wherein the distribution of supports with a male connector (74) exhibits reflective symmetry with a distribution of supports with a female connector (75) with respect to a notional first plane that extends perpendicular to the first direction and through the center of the base wall (53),
**characterized in that** each of the first and second distribution comprises a third set of supports (58) in between the first and second sets consisting of one or more supports having a distal end without a connector.

2. The first rainwater crate (51) according to claim 1, wherein the distribution of supports with a male connector (74) exhibit 180° rotational symmetry with respect to a notional rotational axis that extends perpendicular to and through the center of the base wall (53).

3. The first rainwater crate (51) according to claim 1 or claim 2, wherein the third base wall section is free of supports.

4. The first rainwater crate (51) according to any preceding claim, wherein the at least one support having a distal end comprising a male connector (74) in the first set of supports are supports having a single connector which is male and wherein the at least one support having a distal end comprising a female connector (75) in the second set of supports are supports having a single connector which is female.

5. The first rainwater crate (51) according to any preceding claim, wherein the base wall (53) has a square circumference and wherein the first base wall section, a second base wall section and a third base wall section each have a rectangular circumference.

6. The first rainwater crate (51) according to any preceding claim, wherein the supports are hollow and have an entrance opening (72) at the proximal end of the supports with the base wall (53).

7. The first rainwater crate (51) according to claim 6, wherein the first rainwater crate (51) is configured to have in cooperation with the second rainwater crate (52) a transport position and an installation position, wherein in the transport position the first rainwater crate (51) is positioned straight above the second rainwater crate (52) while the supports are nested into each other via the entrance openings (72), and wherein in the installation position the first rainwater crate (51) is unnested from the second rainwater crate (52) and rotated 180° over a notional first axis that lies in the plane of the base wall (53) and extends through the center of the base wall (53) in the first direction of the first rainwater crate (51).

8. The first rainwater crate (51) according to any preceding claim, wherein the supports are arranged in rows in the first direction of the base wall (53) and/or in columns in a second direction of the base wall (53).

9. The first rainwater crate (51) according to claim 8, wherein an uneven number of supports are provided in each column.

10. The first rainwater crate (51) according to any preceding claim, wherein the number of supports in each of the first and second sets is at least twice the number of supports in the third set.

11. The first rainwater crate (51) according to any preceding claim, wherein the supports in the first base wall section and the second base wall section are equidistantly spaced.

12. The first rainwater crate (51) according to any preceding claim, wherein the sum of the width of the first and second base wall section is larger than the width of the third base wall section; or wherein the sum of the width of the first and third base wall section is less than the width of the second base wall section.

13. The first rainwater crate (51) according to any preceding claim, further comprising at least one sedimentation channel (30) mounted in the third base wall section,
wherein the at least one sedimentation channel (30) extends in the second direction of the base wall (53),
wherein the at least one sedimentation channel (30) has a closed floor.

14. The first rainwater crate (51) according to any preceding claim, wherein the male connector (74) is a plug and the female connector (75) is a socket.

15. The first rainwater crate (51) according to any preceding claim, further comprising a plurality of coupling means located on at least one edge of the base wall (53) suitable for coupling with a side wall having complementary coupling means.

16. A method for stacking a first rainwater crate (51) according to claim 6 and any other preceding claim in a second rainwater crate (52) identical to the first rainwater crate (51),
wherein the supports in the first rainwater crate (51) respectively enter the opening of the supports in the second rainwater crate (52).

17. A set comprising:
. a first rainwater crate (51) according to any preceding claim 1-15, and
. a second rainwater crate (52) identical to the first rainwater crate (51),
wherein the distal ends of the supports in the first rainwater crate (51) are respectively in contact with the distal ends of the supports in the second rainwater crate (52),
wherein the third base wall sections of the first (51) and second rainwater (52) crates together form the opposite walls of a through channel, preferably an inspection channel and/or a sedimentation channel (30).

18. A subterranean rainwater storage device (10) comprising:
. an inner storage body,
. a plurality of coupling means, and
. an outer layer around the inner storage body that together define a rainwater storage device volume,
wherein the inner storage body comprises a plurality of sets according to claim 17,
wherein the outer layer comprises at least one side wall (20) connecting to the first (51) and second rainwater crates (52) in some of the sets,
wherein the coupling means couple adjacent sets to each other.

19. A method for building a set according to claim 17, comprising:
. supplying a plurality of rainwater crates, preferably a plurality of rainwater crates stacked according to claim 16;
. taking a first rainwater crate (51), preferably from the stack, rotating the first rainwater crate (51) and placing the first rainwater crate (51) on the second rainwater crate (52), such that the distal ends of the supports in the first rainwater crate (51) are respectively in contact with the distal ends of the supports in the second rainwater crate (52).

20. A method for building an inversed set comprising a first rainwater crate (51) and a second rainwater crate (52) according to any preceding claim 1-15, comprising:
- supplying a plurality of rainwater crates, preferably a plurality of rainwater crates stacked according to claim 16;
- taking a first rainwater crate (51), preferably from the stack, inverting the first rainwater crate (51) and placing the first rainwater crate (51);
- taking a second rainwater crate (52), preferably from the stack, and placing the second rainwater crate (52) on the first rainwater crate (51), such that the base wall (53) of the first rainwater crate (51) is in contact with the base wall (53) of the second rainwater crate (52) and that the supports on the base walls (53) are aligned.

21. A method for building a subterranean rainwater storage device (10) according to claim 18, comprising:
. supplying a plurality of rainwater crates,
. repeatedly taking a rainwater crate and placing a plurality of said rainwater crates in a row,
. repeatedly taking a rainwater crate and placing the same on a rainwater crate in the row such that the distal ends of the supports in the first rainwater crate (51) are respectively in contact with the distal ends of the supports in the second rainwater crate (52),
. optionally coupling the adjacent rainwater crates in the row to each other,
. optionally mounting one or more side walls on the rainwater crates.

## Patentansprüche

1. Eine erste Regenwasserkiste (51), die zur Zusammenarbeit mit einer identischen zweiten Regenwasserkiste (52) eingerichtet ist zum Aufbau einer unterirdischen Regenwasserspeichervorrichtung (10), die erste Regenwasserkiste (51) umfasst:
eine Bodenwand (53), die einen ersten Bodenwandabschnitt (I), einen zweiten Bodenwandabschnitt (II) und einen dritten Bodenwandabschnitt (III), die in einer ersten Richtung der Bodenwand aufeinanderfolgend angeordnet sind; und mehrere Stützen, die in derselben Richtung von der Bodenwand (53) vorstehen, vorzugsweise senkrecht zu der Bodenwand (53), wobei jeder der ersten und zweiten Bodenwandabschnitte an den dritten Bodenwandabschnitt angrenzt, wobei jeder der ersten und zweiten Bodenwandabschnitte eine oder mehrere der Stützen umfasst, wobei die Stützen in dem ersten Bodenwandabschnitt eine erste Verteilung über den ersten Bodenwandabschnitt aufweisen und die Stützen in dem zweiten Bodenwandabschnitt eine zweite Verteilung über den zweiten Bodenwandabschnitt aufweisen, wobei jede der ersten und zweiten Verteilung umfasst:
ein erstes Set von Stützen (59), umfassend mindestens eine Stütze, mit einem distalen Ende, das mit einem männlichen Verbinder (74) versehen ist, ein zweites Set von Stützen (60), umfassend mindestens eine Stütze, mit einem distalen Ende, das mit einem weiblichen Verbinder (75) versehen ist, und wobei die Verteilung von Stützen mit einem männlichen Verbinder (74) Spiegelungssymmetrie mit einer Verteilung von Stützen mit einem weiblichen Verbinder (75) in Bezug auf eine gedachte erste Ebene aufweist, die sich senkrecht zu der ersten Richtung und durch die Mitte der Bodenwand (53) erstreckt, **dadurch gekennzeichnet, dass** jede der ersten und zweiten Verteilung ein drittes Set von Stützen (58) zwischen dem ersten und zweiten Set umfasst, bestehend aus einer oder mehreren Stützen, die ein distales Ende ohne einen Verbinder aufweisen.

2. Die erste Regenwasserkiste (51) nach Anspruch 1, wobei die Verteilung von Stützen mit einem männlichen Verbinder (74) eine 180°-Drehsymmetrie in Bezug auf eine gedachte Drehachse aufweist, die sich senkrecht zu und durch das Zentrum der Bodenwand (53) erstreckt.

3. Die erste Regenwasserkiste (51) nach Anspruch 1 oder Anspruch 2, wobei der dritte Bodenwandabschnitt frei von Stützen ist.

4. Die erste Regenwasserkiste (51) nach einem der vorhergehenden Ansprüche, wobei die mindestens eine Stütze des ersten Sets von Stützen, die ein distales Ende mit einem männlichen Verbinder (74) aufweist, eine Stütze ist, die einen einzelnen männlichen Verbinder aufweist, und wobei die mindestens eine Stütze des zweiten Sets von Stützen, die ein distales Ende mit einem weiblichen Verbinder (75) aufweist, eine Stütze ist, die einen einzelnen weiblichen Verbinder aufweist.

5. Die erste Regenwasserkiste (51) nach einem der vorhergehenden Ansprüche, wobei die Bodenwand (53) einen quadratischen Umfang aufweist und wobei der erste Bodenwandabschnitt, der zweite Bodenwandabschnitt und der dritte Bodenwandabschnitt jeweils einen rechteckigen Umfang aufweisen.

6. Die erste Regenwasserkiste (51) nach einem der vorhergehenden Ansprüche, wobei die Stützen hohl sind und eine Eintrittsöffnung (72) am proximalen Ende der Stützen mit der Bodenwand (53) aufweisen.

7. Die erste Regenwasserkiste (51) nach Anspruch 6, wobei die erste Regenwasserkiste (51) dazu eingerichtet ist, in Zusammenarbeit mit der zweiten Regenwasserkiste (52) eine Transportposition und eine Einbauposition aufzuweisen, wobei in der Transportposition die erste Regenwasserkiste (51) gerade über die zweite Regenwasserkiste (52) positioniert ist, während die Stützen über die Eintrittsöffnungen (72) ineinander verschachtelt sind, und wobei in der Einbauposition die erste Regenwasserkiste (51) von der zweiten Regenwasserkiste (52) entschachtelt und um 180° über eine gedachte erste Achse gedreht ist, die in der Ebene der Bodenwand (53) liegt und sich durch das Zentrum der Bodenwand (53) in der ersten Richtung der ersten Regenwasserkiste (51) erstreckt.

8. Die erste Regenwasserkiste (51) nach einem der vorhergehenden Ansprüche, wobei die Stützen in Reihen in der ersten Richtung der Bodenwand (53) und/oder in Spalten in einer zweiten Richtung der Bodenwand (53) angeordnet sind.

9. Die erste Regenwasserkiste (51) nach Anspruch 8, wobei eine ungerade Anzahl von Stützen in jeder Spalte vorgesehen ist.

10. Die erste Regenwasserkiste (51) nach einem der vorhergehenden Ansprüche, wobei die Anzahl der Stützen in jedem der ersten und zweiten Sets mindestens das Zweifache der Anzahl der Stützen in dem dritten Set beträgt.

11. Die erste Regenwasserkiste (51) nach einem der vorhergehenden Ansprüche, wobei die Stützen in dem ersten Bodenwandabschnitt und dem zweiten Bodenwandabschnitt äquidistant beabstandet sind.

12. Die erste Regenwasserkiste (51) nach einem der vorhergehenden Ansprüche, wobei die Summe der Breiten des ersten und zweiten Bodenwandabschnitts größer ist als die Breite des dritten Bodenwandabschnitts; oder wobei die Summe der Breiten des ersten und dritten Bodenwandabschnitts kleiner ist als die Breite des zweiten Bodenwandabschnitts.

13. Die erste Regenwasserkiste (51) nach einem der vorhergehenden Ansprüche, ferner umfassend mindestens einen Sedimentationskanal (30), der in dem dritten Bodenwandabschnitt montiert ist, wobei sich der mindestens eine Sedimentationskanal (30) in der zweiten Richtung der Bodenwand (53) erstreckt, wobei der mindestens eine Sedimentationskanal (30) einen geschlossenen Boden aufweist.

14. Die erste Regenwasserkiste (51) nach einem der vorhergehenden Ansprüche, wobei der männliche Verbinder (74) ein Stecker ist und der weibliche Verbinder (75) eine Buchse ist.

15. Die erste Regenwasserkiste (51) nach einem der vorhergehenden Ansprüche, ferner umfassend eine Mehrzahl von Kopplungsmitteln, die an mindestens einer Kante der Bodenwand (53) angeordnet sind und zum Koppeln mit einer Seitenwand mit komplementären Kopplungsmitteln geeignet sind.

16. Ein Verfahren zum Stapeln einer ersten Regenwasserkiste (51) nach Anspruch 6 und einem beliebigen anderen vorhergehenden Anspruch in eine zweite Regenwasserkiste (52), die identisch mit der ersten Regenwasserkiste (51) ist, wobei die Stützen in der ersten Regenwasserkiste (51) jeweils in die Öffnung der Stützen in der zweiten Regenwasserkiste (52) eintreten.

17. Ein Set, umfassend:
eine erste Regenwasserkiste (51) nach einem der vorhergehenden Ansprüche 1-15, und
eine zweite Regenwasserkiste (52), die identisch mit der ersten Regenwasserkiste (51) ist,
wobei die distalen Enden der Stützen in der ersten Regenwasserkiste (51) jeweils in Kontakt mit den distalen Enden der Stützen in der zweiten Regenwasserkiste (52) sind,
wobei die dritten Bodenwandabschnitte der ersten (51) und zweiten Regenwasserkisten (52) zusammen die gegenüberliegenden Wände eines Durchgangskanals bilden, vorzugsweise eines Inspektionskanals und/oder eines Sedimentationskanals (30).

18. Eine unterirdische Regenwasserspeichervorrichtung (10), umfassend:
einen inneren Speicherkörper,
eine Mehrzahl von Kopplungsmitteln, und
eine äußere Schicht um den inneren Speicherkörper, die zusammen ein Regenwasserspeichervorrichtungsvolumen definieren,
wobei der innere Speicherkörper eine Mehrzahl von Sets nach Anspruch 17 umfasst, wobei die äußere Schicht mindestens eine Seitenwand (20) umfasst, die mit der ersten (51) und zweiten Regenwasserkiste (52) in einigen der Sets verbunden ist, wobei die Kopplungsmittel benachbarte Sets miteinander koppeln.

19. Ein Verfahren zum Aufbau eines Sets nach Anspruch 17, umfassend:
Bereitstellen einer Mehrzahl von Regenwasserkisten, vorzugsweise einer Mehrzahl von Regenwasserkisten, die nach Anspruch 16 gestapelt sind;
Aufnehmen einer ersten Regenwasserkiste (51), vorzugsweise aus dem Stapel, Drehen der ersten Regenwasserkiste (51) und Aufsetzen der ersten Regenwasserkiste (51) auf der zweiten Regenwasserkiste (52), so dass die distalen Enden der Stützen in der ersten Regenwasserkiste (51) jeweils in Kontakt mit den distalen Enden der Stützen in der zweiten Regenwasserkiste (52) sind.

20. Ein Verfahren zum Aufbau eines umgekehrten Sets, umfassend eine erste Regenwasserkiste (51) und eine zweite Regenwasserkiste (52) nach einem der vorhergehenden Ansprüche 1-15, umfassend:
- Bereitstellen einer Mehrzahl von Regenwasserkisten, vorzugsweise einer Mehrzahl von Regenwasserkisten, die nach Anspruch 16 gestapelt sind;
- Aufnehmen einer ersten Regenwasserkiste (51), vorzugsweise aus dem Stapel, Umdrehen der ersten Regenwasserkiste (51) und Aufsetzen der ersten Regenwasserkiste (51);
- Aufnehmen einer zweiten Regenwasserkiste (52), vorzugsweise aus dem Stapel, und Aufsetzen der zweiten Regenwasserkiste (52) auf der ersten Regenwasserkiste (51), so dass die Bodenwand (53) der ersten Regenwasserkiste (51) in Kontakt mit der Bodenwand (53) der zweiten Regenwasserkiste (52) ist und dass die Stützen an den Bodenwänden (53) ausgerichtet sind.

21. Ein Verfahren zum Aufbau einer unterirdischen Regenwasserspeichervorrichtung (10) nach Anspruch 18, umfassend:
Bereitstellen einer Mehrzahl von Regenwasserkisten,
wiederholtes Aufnehmen einer Regenwasserkiste und Aufsetzen einer Mehrzahl der genannten Regenwasserkisten in einer Reihe,
wiederholtes Aufnehmen einer Regenwasserkiste und Aufsetzen derselben auf eine Regenwasserkiste in der Reihe, so dass die distalen Enden der Stützen in der ersten Regenwasserkiste (51) jeweils in Kontakt mit den distalen Enden der Stützen in der zweiten Regenwasserkiste (52) sind,
optionales Koppeln der benachbarten Regenwasserkisten in der Reihe miteinander,
optionales Montieren einer oder mehrerer Seitenwände an den Regenwasserkisten.

## Revendications

1. Une première caisse d'eau de pluie (51) configurée pour coopérer avec une deuxième caisse d'eau de pluie identique (52) pour construire un dispositif souterrain de stockage d'eau de pluie (10), la première caisse d'eau de pluie (51) comprenant :
une paroi de base (53) ayant une première section de paroi de base (I), une deuxième section de paroi de base (II) et une troisième section de paroi de base (III) qui sont consécutives l'une à l'autre dans une première direction de la paroi de base ; et
une pluralité de supports faisant saillie dans une même direction depuis la paroi de base (53), de préférence perpendiculairement à la paroi de base (53),
dans laquelle chacune des première et deuxième sections de paroi de base est adjacente à la troisième section de paroi de base,
dans laquelle chacune des première et deuxième sections de paroi de base comprend un ou plusieurs des supports,
dans laquelle les supports dans la première section de paroi de base ont une première distribution sur la première section de paroi de base et les supports dans la deuxième section de paroi de base ont une deuxième distribution sur la deuxième section de paroi de base,
dans laquelle chacune des première et deuxième distributions comprend :
un premier ensemble de supports (59) comprenant au moins un support ayant une extrémité distale pourvue d'un connecteur mâle (74),
un deuxième ensemble de supports (60) comprenant au moins un support ayant une extrémité distale pourvue d'un connecteur femelle (75), et
dans laquelle la distribution de supports avec un connecteur mâle (74) présente une symétrie par réflexion avec une distribution de supports avec un connecteur femelle (75) par rapport à un premier plan imaginaire qui s'étend perpendiculairement à la première direction et à travers le centre de la paroi de base (53),
**caractérisée en ce que** chacune des première et deuxième distributions comprend un troisième ensemble de supports (58) entre les premier et deuxième ensembles constitué d'un ou plusieurs supports ayant une extrémité distale sans connecteur.

2. La première caisse d'eau de pluie (51) selon la revendication 1, dans laquelle la distribution de supports avec un connecteur mâle (74) présente une symétrie de rotation de 180° par rapport à un axe de rotation imaginaire qui s'étend perpendiculairement à la paroi de base (53) et à travers le centre de celle-ci.

3. La première caisse d'eau de pluie (51) selon la revendication 1 ou la revendication 2, dans laquelle la troisième section de paroi de base est dépourvue de supports.

4. La première caisse d'eau de pluie (51) selon l'une quelconque des revendications précédentes, dans laquelle le premier ensemble de supports (59) comprend un ou plusieurs supports dont l'extrémité distale est pourvue d'un unique connecteur mâle (74), et dans laquelle le deuxième ensemble de supports (60) comprend un ou plusieurs supports dont l'extrémité distale est pourvue d'un unique connecteur femelle (75).

5. La première caisse d'eau de pluie (51) selon l'une quelconque des revendications précédentes, dans laquelle la paroi de base (53) a une circonférence carrée et dans laquelle la première section de paroi de base, une deuxième section de paroi de base et une troisième section de paroi de base ont chacune une circonférence rectangulaire.

6. La première caisse d'eau de pluie (51) selon l'une quelconque des revendications précédentes, dans laquelle les supports sont creux et ont une ouverture d'entrée (72) à l'extrémité proximale des supports avec la paroi de base (53).

7. La première caisse d'eau de pluie (51) selon la revendication 6, dans laquelle la première caisse d'eau de pluie (51) est configurée pour avoir, en coopération avec la deuxième caisse d'eau de pluie (52), une position de transport et une position d'installation, dans laquelle dans la position de transport la première caisse d'eau de pluie (51) est positionnée directement au-dessus de la deuxième caisse d'eau de pluie (52) tandis que les supports sont emboîtés les uns dans les autres via les ouvertures d'entrée (72), et dans laquelle dans la position d'installation la première caisse d'eau de pluie (51) est désimbriquée de la deuxième caisse d'eau de pluie (52) et tournée de 180° autour d'un premier axe imaginaire qui se trouve dans le plan de la paroi de base (53) et s'étend à travers le centre de la paroi de base (53) dans la première direction de la première caisse d'eau de pluie (51).

8. La première caisse d'eau de pluie (51) selon l'une quelconque des revendications précédentes, dans laquelle les supports sont disposés en rangées dans la première direction de la paroi de base (53) et/ou en colonnes dans une deuxième direction de la paroi de base (53).

9. La première caisse d'eau de pluie (51) selon la revendication 8, dans laquelle un nombre impair de supports est prévu dans chaque colonne.

10. La première caisse d'eau de pluie (51) selon l'une quelconque des revendications précédentes, dans laquelle le nombre de supports dans chacun des premier et deuxième ensembles est au moins deux fois le nombre de supports dans le troisième ensemble.

11. La première caisse d'eau de pluie (51) selon l'une quelconque des revendications précédentes, dans laquelle les supports dans la première section de paroi de base et la deuxième section de paroi de base sont espacés de manière équidistante.

12. La première caisse d'eau de pluie (51) selon l'une quelconque des revendications précédentes, dans laquelle la somme de la largeur des première et deuxième sections de paroi de base est supérieure à la largeur de la troisième section de paroi de base; ou dans laquelle la somme de la largeur des première et troisième sections de paroi de base est inférieure à la largeur de la deuxième section de paroi de base.

13. La première caisse d'eau de pluie (51) selon l'une quelconque des revendications précédentes, comprenant en outre au moins un canal de sédimentation (30) monté dans la troisième section de paroi de base, dans laquelle l'au moins un canal de sédimentation (30) s'étend dans la deuxième direction de la paroi de base (53), dans laquelle l'au moins un canal de sédimentation (30) a un fond fermé.

14. La première caisse d'eau de pluie (51) selon l'une quelconque des revendications précédentes, dans laquelle le connecteur mâle (74) est une fiche et le connecteur femelle (75) est une prise.

15. La première caisse d'eau de pluie (51) selon l'une quelconque des revendications précédentes, comprenant en outre une pluralité de moyens de couplage situés sur au moins un bord de la paroi de base (53) appropriés pour le couplage avec une paroi latérale ayant des moyens de couplage complémentaires.

16. Un procédé d'empilage d'une première caisse d'eau de pluie (51) selon la revendication 6 et toute autre revendication précédente dans une deuxième caisse d'eau de pluie (52) identique à la première caisse d'eau de pluie (51), dans lequel les supports dans la première caisse d'eau de pluie (51) entrent respectivement dans l'ouverture des supports dans la deuxième caisse d'eau de pluie (52).

17. Un ensemble comprenant :
une première caisse d'eau de pluie (51) selon l'une quelconque des revendications précédentes 1-15, et
une deuxième caisse d'eau de pluie (52) identique à la première caisse d'eau de pluie (51),
dans lequel les extrémités distales des supports dans la première caisse d'eau de pluie (51) sont respectivement en contact avec les extrémités distales des supports dans la deuxième caisse d'eau de pluie (52),
dans lequel les troisièmes sections de paroi de base des première (51) et deuxième (52) caisses d'eau de pluie forment ensemble les parois opposées d'un canal traversant, de préférence un canal d'inspection et/ou un canal de sédimentation (30).

18. Un dispositif souterrain de stockage d'eau de pluie (10) comprenant :
un corps de stockage intérieur,
une pluralité de moyens de couplage, et
une couche extérieure autour du corps de stockage intérieur qui définissent ensemble un volume de dispositif de stockage d'eau de pluie,
dans lequel le corps de stockage intérieur comprend une pluralité d'ensembles selon la revendication 17,
dans lequel la couche extérieure comprend au moins une paroi latérale (20) se raccordant aux première (51) et deuxième caisses d'eau de pluie (52) dans certains des ensembles,
dans lequel les moyens de couplage couplent des ensembles adjacents les uns aux autres.

19. Un procédé de construction d'un ensemble selon la revendication 17, comprenant :
fournir une pluralité de caisses d'eau de pluie, de préférence une pluralité de caisses d'eau de pluie empilées selon la revendication 16 ;
prendre une première caisse d'eau de pluie (51), de préférence depuis la pile, tourner la première caisse d'eau de pluie (51) et placer la première caisse d'eau de pluie (51) sur la deuxième caisse d'eau de pluie (52), de telle sorte que les extrémités distales des supports dans la première caisse d'eau de pluie (51) soient respectivement en contact avec les extrémités distales des supports dans la deuxième caisse d'eau de pluie (52).

20. Un procédé de construction d'un ensemble inversé comprenant une première caisse d'eau de pluie (51) et une deuxième caisse d'eau de pluie (52) selon l'une quelconque des revendications précédentes 1-15, comprenant :
- fournir une pluralité de caisses d'eau de pluie, de préférence une pluralité de caisses d'eau de pluie empilées selon la revendication 16 ;
- prendre une première caisse d'eau de pluie (51), de préférence depuis la pile, inverser la première caisse d'eau de pluie (51) et placer la première caisse d'eau de pluie (51) ;
- prendre une deuxième caisse d'eau de pluie (52), de préférence depuis la pile, et placer la deuxième caisse d'eau de pluie (52) sur la première caisse d'eau de pluie (51), de telle sorte que la paroi de base (53) de la première caisse d'eau de pluie (51) soit en contact avec la paroi de base (53) de la deuxième caisse d'eau de pluie (52) et que les supports sur les parois de base (53) soient alignés.

21. Un procédé de construction d'un dispositif souterrain de stockage d'eau de pluie (10) selon la revendication 18, comprenant :
fournir une pluralité de caisses d'eau de pluie,
prendre de manière répétée une caisse d'eau de pluie et placer une pluralité desdites caisses d'eau de pluie en une rangée,
prendre de manière répétée une caisse d'eau de pluie et placer celle-ci sur une caisse d'eau de pluie dans la rangée, de telle sorte que les extrémités distales des supports dans la première caisse d'eau de pluie (51) soient respectivement en contact avec les extrémités distales des supports dans la deuxième caisse d'eau de pluie (52),
facultativement coupler les caisses d'eau de pluie adjacentes dans la rangée les unes aux autres,
facultativement monter une ou plusieurs parois latérales sur les caisses d'eau de pluie.
